# EUROPÄISCHE PATENTSCHRIFT

(11) **EP 0 521 039 B1**
(45) Veröffentlichungstag und Bekanntmachung des Hinweises auf die Patenterteilung: **30.11.1994**
(21) Anmeldenummer: 91906183.8
(22) Anmeldetag: 13.03.1991
(51) Int. Cl.: G11B 15/22, G11B 15/665

(54) **BREMSEINRICHTUNG**
BRAKING DEVICE
DISPOSITIF DE FREINAGE

(30) Priorität: 21.03.1990 DE 4008996
(43) Veröffentlichungstag der Anmeldung: 07.01.1993
(73) Patentinhaber: Deutsche Thomson-Brandt GmbH, 78003 Villingen-Schwenningen (DE)
(72) Erfinder: SCHANDL, Hartmut, A-1110 Wien (AT); WEISSER, Fritz, D-7742 St. Georgen (DE)
(86) Internationale Anmeldenummer: EP9100463
(87) Internationale Veröffentlichungsnummer: WO9115014

(56) Entgegenhaltungen:
- EP-A- 0 236 962
- EP-A- 0 257 597
- DE-A- 3 629 324
- DE-A- 4 024 316
- US-A- 4 730 792
- US-A- 4 807 061
- PATENT ABSTRACTS OF JAPAN vol.6, No.229 (P-155)(1107) 16 November 1982, & JP-A-57 130258 (MITSUBISHI DENKI K.K.) 12 August 1982
- PATENT ABSTRACTS OF JAPAN vol.9, No. 30 (P-333)(1753) 8 February 1985, & JP-A-59 172177 (SANYO DENKI K.K.) 28 September 1984

## Beschreibung

Die Erfindung betrifft eine Bremseinrichtung für die Wickelteller in einem Magnetbandlaufwerk nach dem Oberbegriff des Anspruchs 1. Eine derartige Einrichtung ist aus US-A-4807061 bekannt. Es ist aus der DE-OS 36 29 324 bekannt, die auch als Hauptbremse bezeichnete Bremseinrichtung mittels eines im Recorder vorhandenen rädelmotors zu steuern. Von der Welle des Motors wird dabei über einen Riementrieb ein Zahnrad - Zahnstangengetriebe zur Betätigung eines Bremsschiebers angetrieben, durch den die jeweilige Stellung der Hauptbremse gesteuert wird. Die Hauptbremse erfüllt die Aufgabe, einerseits das Magnetband nach einem Umspulvorgang abzubremsen und andererseits die Wickelteller im ausgeschalteten Zustand des Gerätes zu arretieren.

Es ist Aufgabe der Erfindung, eine konstruktiv einfache und kostengünstige Bremseinrichtung für die Wickelteller in einem Magnetbandgerät aufzuzeigen.

Diese Aufgabe wird gemäß der Erfindung durch die im Anspruch 1 aufgeführten Merkmale aelöst. Vorteilhafte Weiterbildungen der Erfindung sind in den Untertansprüchen gekennzeichnet.

Aus JP-A-57 130258 ist es bekannt, daß der Bandlademotor als Antriebsquelle eines Bremshebels verwendet wird, wobei der Antrieb über eine Rutschkupplung erfolgt.

Im Prinzip wird von einem Fädelmotor, von dem neben Ein- und Ausfädeln des Magnetbandes einer Magnetbandkassette auch der Ablauf der einzelnen Betriebsarten gesteuert wird, die Bremseinrichtung, d.h. die an die Wickelteller angreifende Hauptbremse mittels eines auf einer Welle fest angeordneten zylindrischen Hubteiles direkt betrieben. Das Hubteil weist eine schraubenlinienförmige Gleitstufe auf, auf welcher die Betätigungsseite eines um einen Drehpunkt beweglichen Steuerhebels gleitet, durch den die Hauptbremse direkt betätigt wird. Die Welle kann, aber muß nicht die Welle des Fädelmotors sein. Durch die Drehrichtung der Welle ist die jeweilige Betriebsstellung, Bremse angezogen oder Bremse gelöst, festgelegt.

Die eine Stellung der Bremse, nämlich die Bremsstellung ist durch die Kraft einer Feder gegeben, die den Steuerhebel um dessen Drehpunkt so auslenkt, daß die Bremsteile der Hauptbremse an die Wickelteller angepreßt werden. Dabei liegt die Betätigungsseite des Steuerhebels auf der Stirnfläche eines das Hubteil umschließenden zylindrischen Mantels von einem Steuerteil auf, welches koaxial auf der Welle mit dem Hubteil über eine Rutschkupplung zusammenwirkt und je nach Drehrichtung der Welle über einen Anschlag am Chassis um einen bestimmten Winkel verstellbar ist. Der zylindrische Mantel des Steuerteiles weist zwei unterschiedlich hoch ausgebildete Stirnflächen auf, deren Höhendifferenz etwa der Höhe der schraubenlinienförmigen Gleitstufe des Hubteiles entspricht.

Bei betätigter Bremse liegt die Betätigungsseite des Steuerhebels auf der unteren Stirnfläche des Steuerteiles auf. Bei weiterer Drehung der Welle gegen den Anschlag verharrt der Steuerhebel auf dieser Stirnfläche. Wird dagegen die Drehrichtung der Welle geändert, gleitet die Betätigungsseite des Steuerhebels durch eine besondere Ausformung des höheren Teiles vom zylindrischen Mantel bei gleichzeitiger Drehung von Steuer- und Hubteil in dieser Richtung von der unteren Stirnfläche auf die Gleitfläche des Hubteiles über. Dabei wird der Steuerhebel durch den höheren Teil des Mantels vom Steuerteil in Richtung Welle elastisch ausgelenkt. Während des nun folgenden Hubvorganges ist die Betätigungsseite des Steuerhebels durch den höheren Teil des Mantels auf der schraubenlinienförmigen Gleitfläche des Hubteiles geführt und wird gegen die Kraft der Feder angehoben. Somit wird die Hauptbremse gelöst. Während dieses Vorganges wird das Steuerteil um einen vorgegebenen Winkel über die Rutschkupplung bis zum anderen Anschlag verstellt. In dieser Anschlagstellung befindet sich die obere Stirnfläche des Steuerteiles in einer Ebene mit der oberen Gleitfläche des Hubteiles und die angehobene Betätigungsseite des Steuerhebels gleitet vom Hubteil auf diese Stirnfläche über, da bei Erreichen der oberen Stirnfläche die elastische Verformung nicht mehr gegeben ist.

In dieser Stellung steht der Steuerhebel mit dem Hubteil nicht mehr in Verbindung. Somit kann die Welle in dieser Richtung weiterdrehen, ohne daß sich an der aufgehobenen Bremsstellung was ändert. Erst bei Drehrichtungsumkehr dreht sich das Steuerteil über die Rutschkupplung zum anderen Anschlag. Während dieser Drehbewegung wird die Höhenstufendifferenz des zylindrischen Mantels durchlaufen, so daß die Betätigungsseite des Steuerhebels durch die Kraft der Feder abrupt von der oberen Stirnfläche auf die untere Stirnfläche des zylindrischen Mantels vom Steuerteil springt und dadurch die Bremsteile der Hauptbremse an die Wickelteller anlegt.

Ein besonderer Vorteil dieser Art der Bremssteuerung besteht in der kurzen Steuerzeit und darin, daß vom Fädelmotor lediglich für den relativ kurzen Hubvorgang ein größeres Drehmoment aufgebracht werden muß, während für weitere, vom Fädelmotor auszuführende Funktionen lediglich das von der Rutschkupplung eingestellte Moment überwunden werden muß.

Je nach Ausführung von Hubteil und zugehörigem Steuerteil ist es möglich, bei Links- oder auch bei Rechtsdrehung der Welle die beschriebenen Vorgänge durchzuführen.

Die Erfindung wird im folgenden in einem Ausführungsbeispiel anhand der Figuren näher erläutert.
Es zeigen:
- Figur 1: eine Bremseinrichtung mit Betätigung durch eine Hubeinrichtung
- Figur 2: eine Darstellung der Hubeinrichtung in verschiedenen Betriebszuständen.

Auf einem Chassis 10 sind die Wickelteller 1, 2 für den Antrieb einer Magnetbandkassette angeordnet, an welche durch Federspannung von Stabfeder 14 miteinander zusammenwirkende Bremsteile 3, 4 angelegt sind. Die Bremsteile 3, 4 sind um Drehpunkte D1, D2 beweglich auf dem Chassis 10 befestigt und weisen hebelförmige Verlängerungen auf, die an einem Punkt A in Kontakt mit einem Steuerhebel 5 stehen, welcher um einen Drehpunkt D3 ebenfalls auf dem Chaussis 10 befestigt ist. Der Steuerhebel 5 ist in seiner Ruhestellung durch eine Feder 6 so eingestellt, daß an Punkt A keine Kraft auf die Bremsteile 3 und 4 ausgeübt wird. Dadurch liegen in dieser (gezeichneten Stellung) die Bremsteile 3, 4 an den Wickeltellern 1, 2 an. Durch Anheben der Betätigungsseite B von Steuerhebel 5 wird an Punkt A eine Kraft auf die Hebel der Bremsteile 3, 4 ausgeübt, so daß diese von den Wickeltellern 1, 2 abgehoben werden. Das Anheben von Steuerhebel 5 an seiner Betätigungsseite B geschieht durch eine schraubenlinienförmige Gleichstufe eines Hubteiles 8, welches auf einer von einem Motor angetriebenen Welle 7 befestigt ist. Dabei gleitet die Betätigungsseite B gegen die Kraft von Feder 6 während des Hubvorganges auf dieser Gleichstufe. In den jeweiligen Endstellungen, Bremse gelöst oder Bremse angezogen, liegt die Betätigungsseite B auf Stirnflächen T1, T2 eines mit dem Hubteil 8 über eine Rutschkupplung (11,12,13) koaxial zusammenwirkenden Steuerteiles 9 auf.

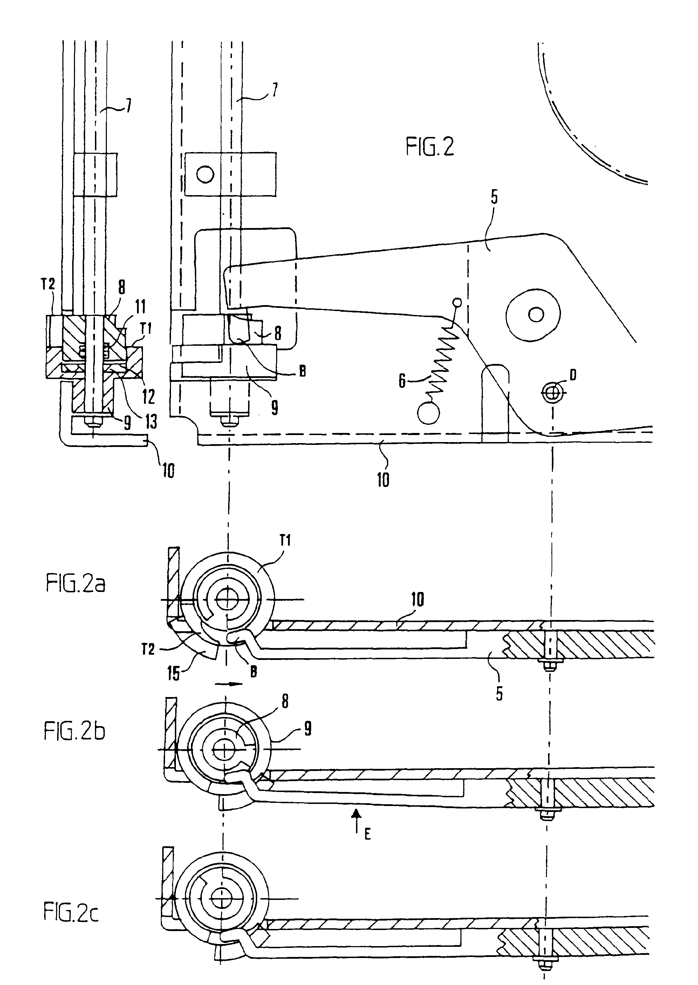

In Fig. 2 sind die verschiedenen Betriebszustände dargestellt. Das Steuerteil 9 weist eine Nase 15 auf, welche durch Anschlag am Chassis 10 nur einen bestimmten Winkel für die Drehbewegung von Steuerteil 9 zuläßt. Die beiden Stirnflächen T1, T2 werden durch einen zylindrischen Mantel von Steuerteil 9 gebildet, welcher das Hubteil 8 umschließt. Dabei entsprechen die unterschiedlichen Höhen der beiden Stirnflächen T1, T2 der Höhendifferenz der schraubenlinienförmigen Gleitstufe von Hubteil 8. Die obere Stirnfläche T2 erstreckt sich etwa über 90°, wogegen die untere Stirnfläche etwa 270° eines Kreisumfanges ausmacht.

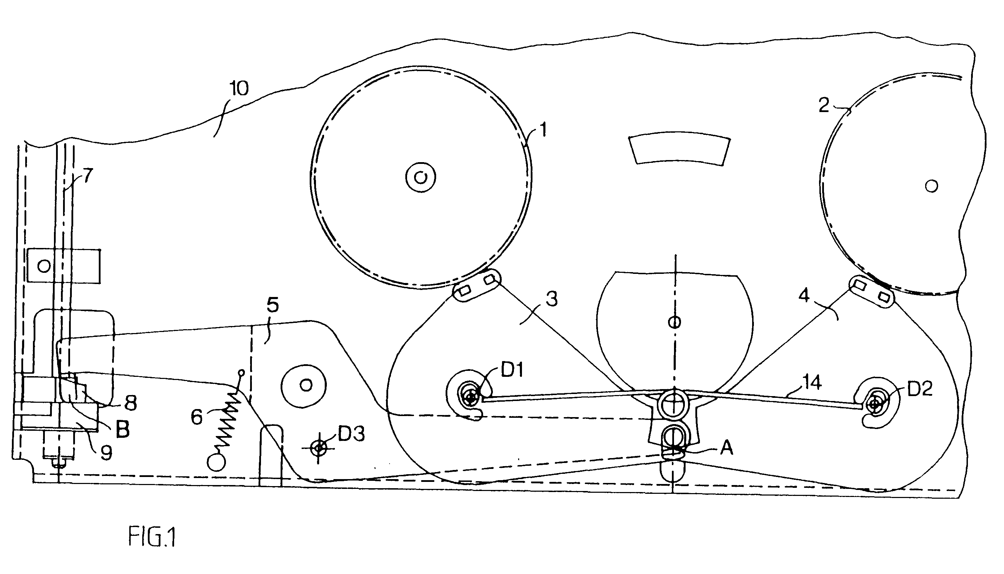

In Fig. 2a, die der in Fig. 1 und in Fig. 2 gezeigten Bremsstellung entspricht, liegt die Betätigungsseite B von Steuerhebel 5 auf der unteren Stirnfläche T1 von Steuerteil 9 auf. Bei Drehung von Welle 7 entgegen der eingezeichneten Pfeilrichtung bleibt der beschriebene Zustand erhalten, da das Steuerteil 9 über die Rutschkupplung 11,12,13 in der eingenommenen Anschlagstellung verharrt. Bei Änderung der Drehrichtung von Welle 7 in Pfeilrichtung wird das Steuerteil 9 über die Rutschkuppiung 11,12,13 gegen den anderen (rechten) Anschlag geführt. Während der Drehung wird durch eine besondere Ausformung des höheren Mantelteiles von Steuerteil 9 der Steuerhebel 5 elastisch verformt, wie durch Pfeil E in Fig. 2b angedeutet und auf die Gleitstufe von Hubteil 8 geführt. Bei weiterer Drehung von Hubteil 8 verharrt das Steuerteil 9 in der gezeigten Anschlagstellung gemäß Fig. 2b und führt die Betätigungsseite 3 von Steuerhebel 5 so lange auf der Gleitstufe des Hubteiles 8, bis die obere Höhe der Stirnfläche T2 von Steuerteil 9 erreicht ist. Bei Erreichen dieser Höhe wird die elastische Verformung E von Steuerteile 5 aufgehoben und die Betätigungsseite 3 gleitet auf die Stirnfläche T2 über. In dieser Stellung, dargestellt in Fig. 2c, ist die Bremse gelöst. Bei weiterer Drehung der Welle 7 in Pfeilrichtung bleibt dieser Zustand erhalten. Erst bei Änderung der Drehrichtung von Welle 7 wird durch Drehung von Steuerteil 9 entgegen der Pfeilrichtung die Höhenstufe T1-T2 der Mantelfläche unter der aufliegenden Betätigungsseite B von Steuerhebel 5 durchlaufen, so daß der Steuerhebel 5 durch die Kraft von Feder 6 abrupt von der oberen Stirnfläche 2 auf die untere Stirnfläche T1 abgesenkt, und die Hauptbremse betätigt wird.

## Patentansprüche

1. Bremseinrichtung für die Wickelteller (1, 2) in einem Magnetbandlaufwerk, bei der zwei um jeweils einen Drehpunkt (D1, D2) bewegliche, durch Federspannung miteinander zusammenwirkende Bremsteile (3, 4) durch einen ebenfalls um einen Drehpunkt (D3) beweglichen Steuerhebel (5) an die Wickelteller (1, 2) anlegbar oder von den Wickeltellern (1, 2) abschwenkbar sind, wobei die Lage des Steuerhebels (5) in Bremsstellung durch die Kraft einer Feder (6) und in gelöster Bremsstellung durch Umsetzung der Drehbewegung eines Motors in eine Hubbewegung an der Betätigungsseite (B) des Steuerhebels (5) gegen die Kraft der Feder (6) eingestellt ist, **dadurch gekennzeichnet**, daß koaxial auf einer vom Motor angetriebenen Welle (7) ein zylindrischer Hubteil (8) fest angeordnet ist, welches eine schraubenlinienförmige Gleitstufe aufweist, auf der die Betätigungsseite (B) von Steuerhebel (5) geführt ist, daß das Hubteil (8) über eine scheibenförmige Rutschkupplung (11, 12, 13) mit einem auf der Welle (7) koaxial angeordneten, um einen festgelegten Winkel drehbaren Führungsteil (9) zusammenwirkt, welches einen, das Hubteil (8) umschließenden, zylindrischen Mantel aufweist, dessen Stirnflächen einen ersten Teilkreisring (T1) mit einer ersten vorgegebenen Höhe bildet, dem sich ein, eine zweite vorgegebene Höhe aufweisender zweiter Teilkreisring (T2) anschließt, wobei die Stirnflächen beider Teilkreisringe als Gleitstufe ausgebildet sind, daß in der einen Endstellung des Führungsteils (9) die Betätigungsseite (B) von Steuerhebel (5) auf der Gleitstufe des ersten Teilkreisringes (T1) und in der anderen Endstellung auf der Gleitstufe des zweiten Teilkreisringes (T2) aufliegt, daß der Übergang der Betätigungsseite (B) des Steuerhebels (5) von dem ersten Teilkreisring (T1) auf den zweiten Teilkreisring (T2) über die Gleitfläche des Hubteils (8), der Übergang von dem zweiten Teilkreisring auf den ersten Teilkreisring zur Erzielung der Bremsung abrupt erfolgt, und daß der festgelegte Drehwinkel von Führungsteil (9) durch eine am Führungsteil (9) befindliche Nase (15) bewirkt wird, welche am Gerätechassis in beiden Drehrichtungen von Welle (7) anschlägt.

2. Bremseinrichtung nach Anspruch 1, **dadurch gekennzeichnet**, daß die Höhenlage der Teilkreisringe (T1,T2) von Führungsteil (9) mit den Anfangs- und Endebenen der schraubenförmigen Gleitstufe von Hubteil (8) fluchten.

3. Bremseinrichtung nach Anspruch 1 oder 2, **dadurch gekennzeichnet**, daß der Teilkreisring (T2) des zylindrischen Mantels von Steuerteil (9), auf dem die Betätigungsseite (B) von Steuerhebel (5) in gelöster Bremsstellung aufliegt, eine tangential zum Hubteil ausgerichtete Ausnehmung aufweist, in welche bei Drehung von Welle (7) und damit auch bei Drehung von Steuerteil (9) über die Rutschkupplung (11,12,13) in Richtung Bremsstellung, die Betätigungsseite (B) von Steuerhebel (5) durch die Kraft von Feder (6) abrupt auf die andere Gleitstufe (T1) gezogen wird und in dieser Stellung bei weiterer Drehung von Welle (7) in Richtung Bremsstellung verweilt.

4. Bremseinrichtung nach Anspruch 3, **dadurch gekennzeichnet**, daß bei Änderung der Drehrichtung von Welle (7) in Richtung gelöste Bremsstellung die Betätigungsseite (B) von Steuerhebel (5) aus der Ausnehmung herausgeführt, über die schraubenlinienförmige Gleitstufe von Hubteil (8) angehoben und bei weiterer Drehung von Welle (7) auf die Gleitfläche des über Rutschkupplung (11,12,13) verstellten Steuerteiles (14) aufgelegt und in dieser Stellung durch die Kraft von Feder (6) gehalten wird, wobei der Steuerhebel (5) während des Hubvorganges durch elastische Verformung, die durch den höheren Teilkreisring (T2) bewirkt wird, auf der Gleitstufe von Hubteil (8) geführt ist.

5. Bremseinrichtung nach Anspruch 1, **dadurch gekennzeichnet**, daß die angetriebene Welle (7) die Motorwelle des Fädelmotors ist.

## Claims

1. Braking device for the spindles (1, 2) in a magnetic tape transport mechanism in which two brake parts (3, 4), which are movable about a respective pivot point (D1, D2) and which cooperate with each other by means of spring tension, can be applied to the spindles (1, 2) or can be pivoted away from the spindles (1, 2) by means of a control lever (5) that is likewise movable about a pivot point (D3), wherein the position of the control lever (5) in the braking position is adjusted by the force of a spring (6) and in the disengaged position of the brake by the conversion of the rotary motion of a motor into a lifting motion at the actuating side (B) of the control lever (5) against the force of the spring (6), characterised in that, a cylindrical lifting part (8) is fixedly arranged coaxially with a shaft (7) that is driven by the motor, which lifting part has a guide-step in the shape of a helix upon which the actuating side (B) of the control lever (5) is guided, that the lifting part (8) co-operates by means of a disc-shaped frictional coupling (11, 12, 13) with a guide part (9) that is rotatable through a predetermined angle and is arranged coaxially with the shaft (7), which guide part has a cylindrical sheath that surrounds the lifting part (8) and its end faces form a first partial annulus (T1) having a first predetermined height to which a second partial annulus (T2) having a second predetermined height is connected, wherein the end faces of the two partial annuli are formed as a guide-step, that in the one end position of the guide part (9), the actuating side (B) of the control lever (5) rests on the guide-step of the first partial annulus (T1) and in the other end position, on the guide-step of the second partial annulus (T2), that the transfer of the actuating side (B) of the control lever (5) from the first partial annulus (T1) to the second partial annulus (T2) is effected via the guide-step of the lifting part (8) and the transfer from the second partial annulus (T2) to the first partial annulus (T1) is effected abruptly for achieving braking, and that the predetermined angle of rotation of the guide part (9) is determined by a nose (15) located on the guide part (9), which nose strikes against the chassis of the device in both directions of rotation of the shaft (7).

2. Braking device in accordance with Claim 1, characterised in that, the height locations of the partial annuli (T1, T2) of the guide part (9) are aligned with the starting and end planes of the helically shaped guide-step of the lifting part (8).

3. Braking device in accordance with Claim 1 or 2, characterised in that, the partial annulus (T2) of the cylindrical sheath of the control part (9), upon which the actuating side (B) of the control lever (5) rests in the disengaged position of the brake, has a recess which is directed tangentially of the lifting part and in which the actuating side (B) of the control lever (5) is abruptly drawn to the other guide-step (T1) by the force of the spring (6) during the rotation of the shaft (7) and thus too, during the rotation of the control part (9) by means of the frictional coupling (11, 12, 13) in the direction of the braking position, and dwells in this position during further rotation of the shaft (7) in the direction of the braking position.

4. Braking device in accordance with Claim 3, characterised in that, upon an alteration of the direction of rotation of the shaft (7) in the direction of the position where the brake is disengaged, the actuating side (B) of the control lever (5) is fed out from the recess, is lifted by the helically shaped guide-step of the lifting part (8) and, during further rotation of the shaft (7), is applied to the glide surface of the control part (11) which is displaced by the frictional coupling (11, 12, 13) and is held in this position by the force of the spring (6), whereby the control lever (5) is guided onto the guide-step of the lifting part (8) during the lifting process by elastic deformation which is caused by the higher partial annulus (T2).

5. Braking device in accordance with Claim 1, characterised in that, the driven shaft (7) is the motor shaft of the threading motor.

## Revendications

1. Dispositif de freinage pour les plateaux d'enroulement (1, 2) dans un mécanisme d'entraînement de bande magnétique, dans lequel deux pièces de freinage (3, 4), mobiles respectivement chacune autour d'un pivot (D1, D2), qui coopèrent l'une avec l'autre par tension d'un ressort, peuvent être appliquées par un levier de commande (5), également mobile autour d'un pivot (D3), aux plateaux d'enroulement (1, 2) ou peuvent être pivotées pour quitter les plateaux d'enroulement (1, 2), la position du levier de commande (5) en position de freinage étant réglée par la force d'un ressort (6) et, en position de frein desserré, par la transformation du mouvement de rotation d'un moteur en un mouvement de levage sur la face d'actionnement (B) du levier de commande (5) contre la force du ressort (6), **caractérisé en ce** qu'une pièce de levage cylindrique (8) est placée de manière fixe coaxialement sur un arbre (7) entraîné par le moteur, pièce de levage qui présente un étage de glissement hélicoïdal sur lequel la face d'actionnement (B) du levier de commande (5) est guidée, que la pièce de levage (8) coopère, par un accouplement à glissement en forme de disque (11, 12, 13), avec une pièce de guidage (9) rotative d'un angle qui est fixé, placée coaxialement sur l'arbre (7), pièce de guidage qui présente une enveloppe cylindrique, qui entoure la pièce de levage (8), dont les faces frontales forment un premier anneau de cercle partiel (T1) avec une première hauteur prédéfinie qui est suivi par un second anneau de cercle partiel (T2) qui présente une seconde hauteur prédéfinie, les faces frontales des deux anneaux de cercle partiels étant configurées comme un étage de glissement, que, dans l'une des positions terminales de la pièce de guidage (9), la face d'actionnement (B) du levier de commande (5) repose sur l'étage de glissement du premier anneau de cercle partiel (T1) et, dans l'autre position terminale, repose sur l'étage de glissement du second anneau de cercle partiel (T2), que la transition de la face d'actionnement (B) du levier de commande (5) du premier anneau de cercle partiel (T1) au second anneau de cercle partiel (T2) se fait par la face de glissement de la pièce de levage (8), la transition du second anneau de cercle partiel au premier anneau de cercle partiel pour atteindre l'action de freinage se faisant de manière abrupte, et que l'angle de rotation de la pièce de guidage (9) qui est fixé étant provoqué par un tenon (15) qui se trouve sur la pièce de guidage (9), tenon qui bute sur le châssis de l'appareil dans les deux sens de rotation de l'arbre (7).

2. Dispositif de freinage selon la revendication 1, **caractérisé en ce** que la position en hauteur des anneaux de cercle partiels (T1, T2) de la pièce de guidage (9) est alignée avec les plans de début et de fin de l'étage de glissement hélicoïdal de la pièce de levage (8).

3. Dispositif de freinage selon la revendication 1 ou 2, **caractérisé en ce** que l'anneau de cercle partiel (T2) de l'enveloppe cylindrique de la pièce de commande (9), sur lequel repose la face d'actionnement (B) du levier de commande (5) en position de frein relâché, présente un évidement, dirigé tangentiellement par rapport à la pièce de levage, dans lequel, lors de la rotation de l'arbre (7) et donc aussi lors de la rotation de la pièce de commande (9) par l'accouplement à glissement (11, 12, 13) en direction de la position de freinage, la face d'actionnement (B) du levier de commande (5) est tirée par la force du ressort (6) de manière abrupte sur l'autre étage de glissement (T1) et reste dans cette position lors de la poursuite de la rotation de l'arbre (7) en direction de la position de freinage.

4. Dispositif de freinage selon la revendication 3, **caractérisé en ce** que, lors de la modification du sens de rotation de l'arbre (7) dans le sens de la position de frein relâché, la face d'actionnement (B) du levier de commande (5) est guidée hors de l'évidement, soulevée par l'étage de glissement hélicoïdal de la pièce de levage (8) et qu'elle est, lors de la poursuite de la rotation de l'arbre (7), posée sur la surface de glissement de la pièce de commande (14) déplacée par l'accouplement à glissement (11, 12, 13) et maintenue dans cette position par la force du ressort (6), le levier de commande (5) étant guidé pendant l'opération de levage par une déformation élastique, qui est provoquée par l'anneau de cercle partiel plus élevé (T2), sur l'étage de glissement de la pièce de levage (8).

5. Dispositif de freinage selon la revendication 1, **caractérisé en ce** que l'arbre entraîné (7) est l'arbre du moteur d'enfilement.
